# EUROPÄISCHE PATENTSCHRIFT

(11) **EP 1 884 702 B1**
(45) Veröffentlichungstag und Bekanntmachung des Hinweises auf die Patenterteilung: **01.05.2019**
(21) Anmeldenummer: 07014874.7
(22) Anmeldetag: 30.07.2007
(51) Int. Cl.: F16L 3/237, H02G 3/32

(54) **Schelle zur Fixierung strangförmiger Bauteile**
Bracket for attaching restiform components
Etrier destiné à la fixation de composants en forme de tronçon

(30) Priorität: 03.08.2006 DE 102006036232
(43) Veröffentlichungstag der Anmeldung: 06.02.2008
(73) Patentinhaber: HYDAC Accessories GmbH, 66280 Sulzbach/Saar (DE)
(72) Erfinder: Petry, Timo, 66839 Schmelz (DE)
(74) Vertreter: Bartels und Partner, Patentanwälte

(56) Entgegenhaltungen:
- FR-A1- 2 476 246
- GB-A- 2 258 004

## Beschreibung

Die Erfindung betrifft eine Schelle zur Fixierung strangförmiger Bauteile, insbesondere für eine Verwendung als Distanzhalter zwischen Schläuchen und/oder Kabeln, mit aneinander festlegbaren Schellenkörpern, die zwischen sich Aufnahmekanäle für die zu fixierenden Bauteile bilden, und mit einer Rasteinrichtung zur gegenseitigen Verrastung der Schellenkörper in aneinander festgelegtem Zustand, wobei die Rasteinrichtung an einem Schellenkörper mindestens einen bewegbaren Rastkörper aufweist, der bei aneinander angenäherten Schellenkörpern mit einer am anderen Schellenkörper befindlichen Rastfläche verhakbar ist, und wobei in zumindest einem Schellenkörper ein Sitz vorhanden ist.

Bei Anlagen, bei denen Schläuche oder Kabel oder auch Rohrleitungen an bewegbaren Anlagenteilen verlegt sind, kann es aufgrund von Reibung oder Vibrationsbelastungen zu Beschädigungen der betreffenden strangförmigen Bauteile kommen. Um dem zu begegnen ist es Stand der Technik, an kritischen Stellen Schellen anzubringen, die, als Distanzhalter wirkend, die betreffenden Bauteile in einem Abstand voneinander führen. Die Schellen werden zu diesem Zweck, ohne dass eine Befestigung an einer Halterung vorgesehen ist, fliegend verbaut.

Wegen des Fehlens einer Befestigungsstelle ist beim Montagevorgang keiner der Schellenkörper lagefixiert, so dass beim Einbauvorgang beide Schellenkörper gehandhabt und positioniert werden müssen. Dadurch gestaltet sich der Montagevorgang umständlich, zeitraubend und manchmal schwierig.

Durch die GB-A-2 258 004 ist für eine Befestigungsschelle gattungsgemäßer Art bereits vorgeschlagen worden, zwei Schellenhälften zur Aufnahme der strangförmigen Bauteile um eine Achse klappbar zu gestalten, wobei an gegenüberliegenden Enden der dahingehend gebildeten Schellenkörper angebrachte Rastnasen als Rasteinrichtung miteinander verhakbar sind, sobald für den Festlegevorgang die Schellenkörper um die Achse vollständig geschwenkt übereinanderliegen. Ferner weist die bekannte Lösung ein Schraubenführungsteil auf, das über eine leicht brechbare Trennstelle mit einem an den Schellenkörpern seitlich angebrachten Führungskörper in Verbindung steht und in diesem teilweise geführt ist. Wird über den Schraubenkanal des Schraubenführungsteils eine Schraube eingedreht, wird die genannte Trennstelle abgeschert und das Schraubenführungsteil in den Führungskörper bis zu einer Schulteranschlagstelle eingeführt, bei der dann die Befestigungsschraube die Schelle an Drittbauteilen für eine entsprechende Fixierung der strangförmigen Bauteile festlegt. Bei einer abgewandelten Ausführungsform (Fig.9) weist die bekannte Lösung darüber hinaus alternativ anstelle des Schraubenführungsteils an einem geschlossenen Ende des Führungskörpers ein ankerartiges Klippteil auf, das entsprechend zuordenbare Ausnehmungen an dem jeweiligen Drittbauteil durchgreift und die sich abspreizenden Eingriffsteile des Ankers verhaken dann für eine Festlegung der Schelle an dem Drittbauteil.

Eine Sicherung der Schellenkörper dergestalt, dass sich die ineinandergreifenden Rastnasen der Rasteinrichtung nicht unbeabsichtigt voneinander lösen können, ist nicht vorgesehen, so dass insbesondere beim Auftreten von Vibrationen, wie sie beim Einsatz solcher Schellenbefestigungssysteme bei Arbeitsmaschinen, wie Baggern od. dgl., auftreten können, insoweit ein ungewolltes Lösen der genannten strangförmigen Bauteile nicht ausgeschlossen werden kann.

Eine weitere Schelle geht aus der FR 2 476 246 hervor.

Ausgehend von diesem Stand der Technik liegt der Erfindung die Aufgabe zugrunde, eine Schelle zur Verfügung zu stellen, die neben einer besonders schnellen und einfachen Montage auch im erschwerten Arbeitsbetrieb, beispielsweise bei Auftreten entsprechender Aggregatvibrationen, die aufzunehmenden strangförmigen Bauteile sicher hält.

Erfindungsgemäß ist diese Aufgabe durch eine Schelle gelöst, die die Merkmale des Patentanspruches 1 in seiner Gesamtheit aufweist.

Dadurch, dass gemäß dem kennzeichnenden Teil des Patentanspruches 1 ein von der Außenseite der Schelle her in den Sitz eingesetztes, separates Verriegelungsteil eine Verriegelungsposition vorgibt, in der das Verriegelungsteil den an der Rastfläche verhakten Rastkörper gegen Aushaken sichert, indem das Verriegelungsteil zumindest teilweise in den Rastkörper eingreift, ist die Schelle gegen ungewolltes Öffnen endgültig gesichert, da nunmehr die Rasteinrichtung gegen ein Lösen der Verrastung definiert verriegelt werden kann.

Das separate Verriegelungsteil kann in einer Packungseinheit mit der Schelle verbrauchsfertig mitgeliefert werden und gegebenenfalls auch in Mehrfachstücken der Packungseinheit beigegeben werden, um dergestalt bei einem etwaigen Verlust eines Verriegelungsteils noch ein weiteres zur Hand zu haben. Es besteht aber auch die Möglichkeit, das Verriegelungsteil als separates Bauteil über eine Trennstelle an dem sonstigen Schellenkörper anzuordnen, um dann bei Bedarf in der Art einer Knebelabdrehbewegung das Verriegelungsteil von der Schelle zu lösen, um sie dann vorzugsweise von Hand in den genannten Sitz der Rastkörperanordnung lösbar einzuschieben. Ferner kann das genannte Verriegelungsteil an seiner Außenseite, soweit diese in den genannten Sitz eingreift, mit zusätzlichen Rasthilfen versehen sein, beispielsweise in Form einer aufgerauhten Oberfläche oder in Form eines Klebstoffauftrages etc., was einen permanenten Eingriff des Verriegelungsteils in dem Rastkörper dann sicherstellt.

Sofern die Schellenkörperanordnung auf der gegenüberliegenden Seite der Einsatz-Stoßrichtung des Verriegelungsteils eine entsprechende Kanalöffnung vorsieht, kann auch mittels eines geeigneten Betätigungswerkzeuges (Schraubendreher od. dgl.) das Verriegelungsteil wiederum aus dem Sitz des Rastkörpers längs dessen Führungsbahn ausgestoßen werden, um dergestalt die Rasteinrichtung für einen erneuten Öffnungsvorgang der Schelle zu lösen. Somit ist eine besonders einfache Handhabung der Verriegelung dadurch erreicht, dass der Sitz durch eine Führungsbahn des Rastkörpers gebildet ist, längs deren das als vorzugsweise in der Art einer Verriegelungsleiste gestaltete Verriegelungsteil in die Verriegelungsposition einschiebbar ist, die insoweit wieder reversibel gelöst werden kann.

Mit der erfindungsgemäßen Lösung steht eine Schelle zur Verfügung, die eine schnelle Montage ohne Werkzeuge ermöglicht, wobei gleichzeitig hohe Betriebssicherheit durch die Möglichkeit der Verriegelung der Rasteinrichtung gewährleistet ist.

Hierbei kann die Anordnung so getroffen sein, dass der Rastkörper beim Aushaken mit einer quer zur Führungsbahn verlaufenden Bewegung die Führungsbahn verengt und dass das in der Führungsbahn in der Verriegelungsposition befindliche Verriegelungsteil diese Bewegung des Rastkörpers mittels Formschlusses blockiert. Die Sicherung des geschlossenen Zustandes der Schelle erfolgt somit durch einen doppelten Formschluss, nämlich zum einen durch formschlüssige Verhakung zwischen Rastkörper und Rastfläche und durch eine formschlüssige Blockierung des Rastkörpers gegen Aushaken.

Eine besonders einfache Bauweise ergibt sich, wenn der Rastkörper in der der Verhakung entsprechenden Stellung einen Wandteil der Führungsbahn bildet, an dem das in der Verriegelungsposition befindliche Verriegelungsteil anliegt.

Bei vorteilhaften Ausführungsbeispielen sind am einen Schellenkörper zwei Rastkörper und am anderen Schellenkörper zwei zugeordnete Rastflächen in solcher gegenseitigen Lagebeziehung angeordnet, dass die Rastkörper einander zugekehrte Wandteile der Führungsbahn bilden, zwischen denen das in der Verriegelungsposition befindliche Verriegelungsteil aufgenommen ist. Diese bildet daher die gleichzeitige, formschlüssige Verriegelung einer Doppelverrastung.

Eine besonders einfache und bequeme Montage ermöglicht ein Ausführungsbeispiel, bei dem die Rastkörper am einen Schellenkörper und die Rastflächen am anderen Schellenkörper so gestaltet sind, dass beim aneinander Annähern der Schellenkörper und bei außerhalb der Führungsbahn befindlicher Verriegelungsleiste die Verhakung durch selbsttätiges Einrasten erfolgt. Beim Montagevorgang brauchen daher die beiden Schellenkörper lediglich miteinander verklipst zu werden.

Hierbei kann die Anordnung so getroffen sein, dass die Rastkörper in die der Verhakung entsprechende Stellung federnd vorgespannt und mit Schrägflächen versehen sind, die beim aneinander Annähern der Schellenkörper durch Anlaufen am Endrand der Rastflächen die Rastkörper gegen die Elastizitätskraft bewegen, wonach diese beim Überlaufen der Endränder an den Rastflächen einschnappen.

Die erfindungsgemäße Schelle ist auf besonders einfache und kostengünstige Weise dadurch herstellbar, dass beide Schellenkörper aus einem Kunststoffwerkstoff als einteiliger Verbund spritzgeformt sind, bei dem die Schellenkörper über ein Filmscharnier miteinander verbunden sind. Dadurch, dass beide Schellenkörper als zusammenhängender Verbund hergestellt sind, ergibt sich auch eine Vereinfachung der Lagerhaltung.

Bei Ausführungsbeispielen, bei denen das Filmscharnier längs eines gemeinsamen Endes beider Schellenkörper eine Klappachse für das Aneinanderlegen der Schellenkörper bildet, die sich parallel zur Durchgangsrichtung der Aufnahmekanäle erstreckt, ergibt sich eine besondere Vereinfachung der Montage, weil die Schellenkörper lediglich zusammengeklappt zu werden brauchen, um die Verrastung herzustellen.

Besondere Vorteile hinsichtlich Lagerhaltung und Handhabung ergeben sich, wenn das Verriegelungsteil, wie bereits dargelegt, über eine dessen Abtrennen ermöglichende Sollbruchstelle an einem der Schellenkörper angeformt ist. Die Schelle kann hierbei mit sämtlichen, zur Montage erforderlichen Komponenten als eine Einheit ausgeliefert und am Montageort zur Verfügung gestellt werden.

Eine besonders kompakte Bauform der Schelle ergibt sich, wenn am betreffenden Schellenkörper die Führungsbahn der Verriegelungsleiste mittig zwischen zwei zueinander symmetrisch gelegenen Aufnahmekanälen gelegen ist und zur Trennebene der Schellenkörper senkrecht verläuft.

Nachstehend ist die Erfindung anhand eines in der Zeichnung dargestellten Ausführungsbeispieles im Einzelnen erläutert. Es zeigen:
- Fig. 1: eine perspektivische Schrägansicht des Ausführungsbeispieles der erfindungsgemäßen Schelle mit einem Verriegelungsteil in Form einer Verriegelungsleiste, wobei die Schelle in geöffnetem Zustand und vor dem Einsetzen des Verriegelungsteiles dargestellt ist;
- Fig. 2: eine perspektivische Schrägansicht des Ausführungsbeispieles in voll geöffnetem Zustand und mit an einem Schellenkörper angeformter Verriegelungsleiste als Verriegelungsteil;
- Fig. 3: einen zentralen Querschnitt des Ausführungsbeispieles in geschlossenem und verrastetem Zustand, wobei jedoch die in Ansicht gezeigte Verriegelungsleiste noch nicht eingesetzt ist; und
- Fig. 4: eine der Fig. 3 entsprechende Schnittdarstellung mit in ihre Führungsbahn eingesetzter, die Verrastung verriegelnder Verriegelungsleiste.

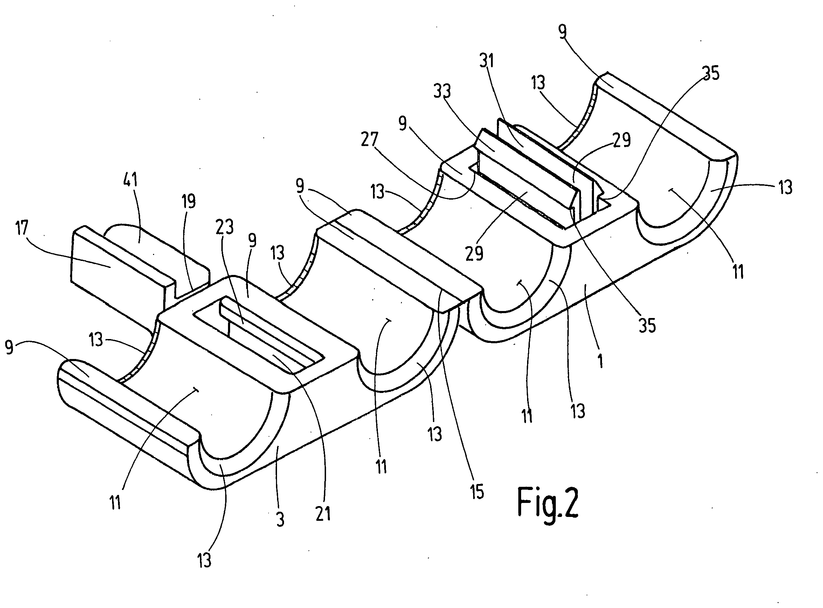

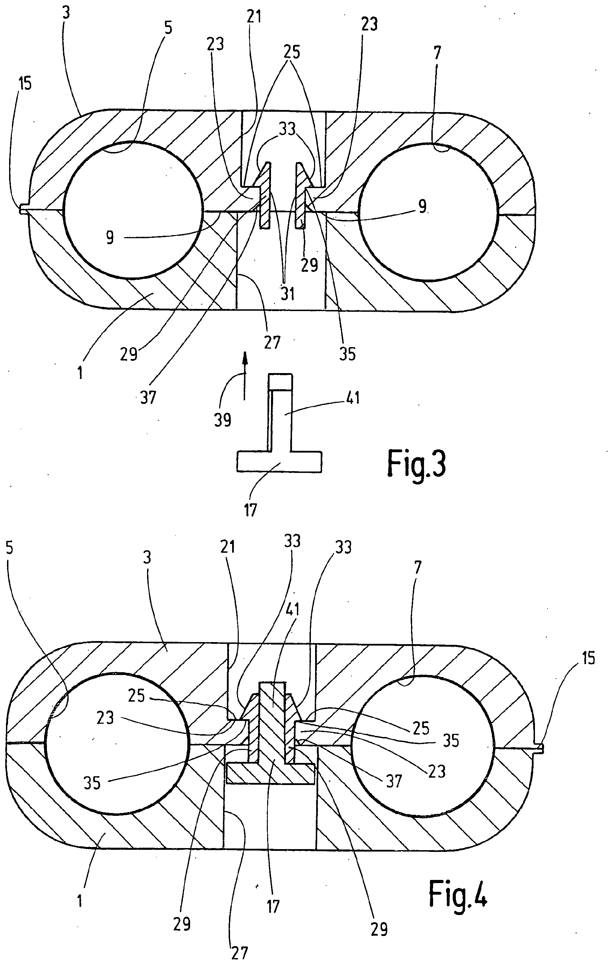

Bei dem in der Zeichnung dargestellten Ausführungsbeispiel der erfindungsgemäßen Schelle bilden ein erster Schellenkörper 1 und ein zweiter Schellenkörper 3 bei dem geschlossenen Zustand der Schelle, der in Fig. 3 und 4 dargestellt ist, zwischen sich zwei im Querschnitt kreisrunde Aufnahmekanäle 5 und 7 für je ein zu fixierendes strangförmiges Bauteil. Die Aufnahmekanäle 5 und 7 sind zueinander symmetrisch bezüglich einer zentralen Längsachse der Schellenkörper 1 und 3 angeordnet, könnten jedoch auch zueinander unsymmetrisch und/oder mit unterschiedlicher Durchmessergröße vorgesehen sein. Beim gezeigten Beispiel sind die Schellenkörper 1 und 3, abgesehen von ihren jeweiligen, zwischen den Aufnahmekanälen 5, 7 befindlichen Zentralbereichen gleich gestaltet, wobei, wie insbesondere aus Fig. 2 deutlich entnehmbar ist, jeder Schellenkörper 1,3 einen Block mit eine Trennebene bildenden Endflächen 9 bildet, wobei die Endflächen 9 durch halbzylinderförmige Mulden 11 unterbrochen sind, die beim geschlossenen Zustand der Schelle die Aufnahmekanäle 5 und 7 definieren. Die Enden der Mulden 11 weisen jeweils eine Abrundung 13 auf, um Beschädigungen der aufgenommenen Bauteile bei dynamischen Belastungen zu vermeiden. Überdies können die Innenflächen der Mulden 11 ballig ausgeführt sein, wodurch Durchmessertoleranzen der aufgenommenen Kabel oder Schläuche ausgeglichen werden können.

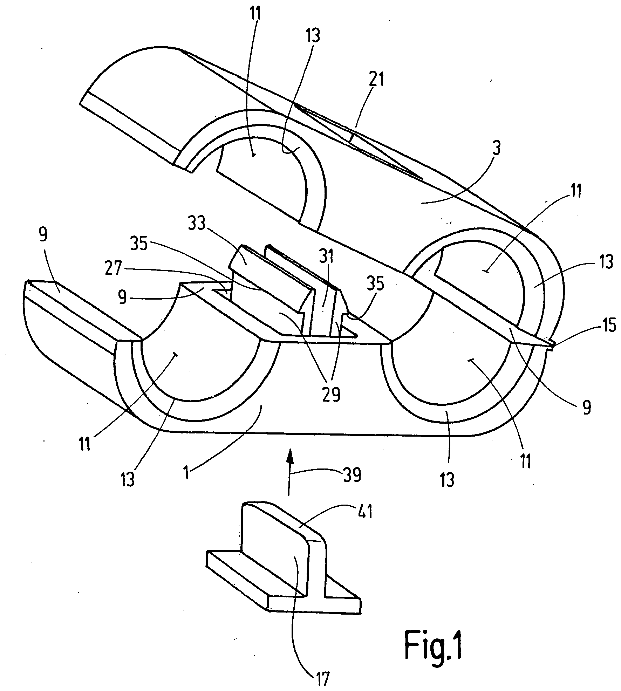

Wie aus Fig. 1 und 2 zu entnehmen ist, ist die gesamte Schelle mit den Schellenkörpern 1 und 3 als einteiliger Verbund spritzgeformt, wobei die Schellenkörper 1 und 3 an einem Filmscharnier 15 miteinander zusammenhängen. Dieses erstreckt sich an einem Ende der Schellenkörper 1, 3 parallel zur Durchgangsrichtung der Aufnahmekanäle 5, 7 und bildet eine Klappachse, an der die Schellenkörper 1, 3 miteinander zusammengeklappt werden können. Wie ebenfalls Fig. 2 zeigt, ist ein Verriegelungsteil in Form einer Verriegelungsleiste 17 als integraler Bestandteil des Verbundes seitlich am Schellenkörper 3 an dessen Zentralbereich angeformt, wobei an der Verbindungsstelle eine Sollbruchstelle 19 ausgebildet ist, die ein Abreißen der Verriegelungsleiste 17 ermöglicht.

Die Schellenkörper 1 und 3 sind, abgesehen von ihren jeweiligen, zwischen den Aufnahmekanälen 5, 7 gelegenen Zentralbereichen, gleich geformt. Der Schellenkörper 3 weist in seinem Zentralbereich eine Öffnung 21 auf, die von der Außenseite bis zur Endfläche 9 durchgehend verläuft, jedoch in der Nähe der Endfläche 9 durch zwei aus der Wand der Öffnung 21 vorspringenden, zueinander entgegengesetzten Ansätzen 23 verengt ist. Diese Ansätze 23 bilden Rastflächen, die im Abstand von der Endfläche 9 in gemeinsamer Ebene miteinander verlaufen.

Der Schellenkörper 1 weist ebenfalls im Zentralbereich eine durchgehende Öffnung 27 auf, wobei jedoch an dem der Endfläche 9 benachbarten Endbereich der Öffnung 27 Rastkörper 29 an der in Querrichtung der Schelle verlaufenden Innenwand der Öffnung 27 angeformt sind. Diese Rastkörper 29 haben die Form dünnwandiger Platten, die am Schellenkörper 1 derart auskragend angeformt sind, dass sie elastisch ausbiegbar sind. Die Rastkörper 29 erstrecken sich, wie am besten aus Fig. 2 zu ersehen ist, parallel zur Durchgangsrichtung der Aufnahmekanäle 5, 7, d. h. der Längsrichtung der Mulde 11, und sind voneinander in einem Abstand angeordnet, wobei einander zugekehrte Wandteile 31 der Rastkörper 29 zueinander parallele Ebenen definieren, die zwischen sich eine Führungsbahn für die Verriegelungsleiste 17 definieren. Die von der Öffnung 27 des Schellenkörpers 1 auskragenden federnden Rastkörper 29 enden in hakenartigen Rastnasen 35, die zur Verhakung mit den Rastflächen 25 des Schellenkörpers 3 vorgesehen sind.

Um beim Zusammenklappen das Einrasten zu erleichtern, sind die Ansätze 23 an den an die Endfläche 9 angrenzenden Endrändern 37 leicht abgeschrägt.

Bei der gezeigten Anordnung der Rastkörper 29 bilden sie eine Klipsanordnung, bei der die Rastkörper 29 in die Verhakungposition federnd vorgespannt sind, so dass beim Zusammenklappen der Schellenkörper 1 und 3 die Rastkörper 29 durch Anlaufen der Schrägflächen 33 an den Endrändern 37 zunächst elastisch zueinander bewegt werden, wonach die Rastnasen 35 nach Überlaufen der Ansätze 23 zur Verhakung an den Rastflächen 25 einschnappen.

Wie bereits erwähnt, bilden die Wandteile 31 zwischen den Rastkörpern 29 eine Führungsbahn, in die die Verriegelungsleiste 17 in der mit Pfeil 39 angedeuteten Verschieberichtung einschiebbar ist.

Fig. 4 zeigt die Verriegelungsleiste 17 in der eingeschobenen Verriegelungsposition. In dieser ist die Verriegelungsleiste 17 mit ihrem Leistenkörper 41 passend zwischen den Wandteilen 31 aufgenommen, so dass ein Aushaken der Rastkörper 29, was nur durch eine Verengung der Führungsbahn zwischen den Wandteilen 31 erfolgen könnte, durch formschlüssige Anlage des Leistenkörpers 41 verhindert ist. Die Schelle ist somit in geschlossenem Zustand fest verriegelt und kann nur mit einem geeigneten Werkzeug wieder geöffnet werden, indem von der offenen Seite der Öffnung 21 her ein geeignetes Werkzeug eingeführt wird, um die Verriegelungsleiste 17 aus der Öffnung 27 des Schellenkörpers 1 heraus zu schieben. Die Verriegelungsleiste 17 ist Teil eines T-förmigen Verriegelungskörpers, wobei die quer zur Verriegelungsleiste 17 verlaufenden Wandteile bevorzugt in symmetrischer Anordnung eine verbreiterte Handhabungsfläche bilden, um dergestalt, beispielsweise mittels Daumenkraft, in den Führungskanal des Rastkörpers 29 eingeschoben werden zu können.

## Patentansprüche

1. Schelle zur Fixierung strangförmiger Bauteile, insbesondere für eine Verwendung als Distanzhalter zwischen Schläuchen und/oder Kabeln, mit aneinander festlegbaren Schellenkörpern (1, 3), die zwischen sich Aufnahmekanäle (5, 7) für die zu fixierenden Bauteile bilden, und mit einer Rasteinrichtung zur gegenseitigen Verrastung der Schellenkörper in aneinander festgelegtem Zustand, wobei die Rasteinrichtung an einem Schellenkörper (1) mindestens einen bewegbaren Rastkörper (29) aufweist, der bei aneinander angenäherten Schellenkörpern (1, 3) mit einer am anderen Schellenkörper (3) befindlichen Rastfläche (25) verhakbar ist, und wobei in zumindest einem Schellenkörper (1) ein Sitz vorhanden ist, **dadurch gekennzeichnet, dass** ein von der Außenseite der Schelle her in den Sitz eingesetztes, separates Verriegelungsteil (17) eine Verriegelungsposition vorgibt, in der das Verriegelungsteil (17) den an der Rastfläche (25) verhakten Rastkörper (29) gegen Aushaken sichert, indem das Verriegelungsteil (17) zumindest teilweise in den Rastkörper (29) eingreift.

2. Schelle nach Anspruch 1, **dadurch gekennzeichnet, dass** der Sitz durch eine Führungsbahn (31) gebildet ist, längs deren das Verriegelungsteil (17) in die Verriegelungsposition verschiebbar ist.

3. Schelle nach Anspruch 2, **dadurch gekennzeichnet, dass** der Rastkörper (29) beim Aushaken mit einer quer zur Führungsbahn (31) verlaufenden Bewegung die Führungsbahn (31) verengt und dass das in der Führungsbahn (31) in der Verriegelungsposition befindliche Verriegelungsteil (17) diese Bewegung des Rastkörpers (29) mittels Formschlusses blockiert.

4. Schelle nach Anspruch 3, **dadurch gekennzeichnet, dass** der Rastkörper (29) in der der Verhakung entsprechenden Stellung einen Wandteil (31) der Führungsbahn bildet, an dem das in der Verriegelungsposition befindliche Verriegelungsteil (17) anliegt.

5. Schelle nach Anspruch 4, **dadurch gekennzeichnet, dass** am einen Schellenkörper (1) zwei Rastkörper (29) und am anderen Schellenkörper (3) zwei zugeordnete Rastflächen (25) in solcher gegenseitigen Lagebeziehung angeordnet sind, dass die Rastkörper (29) einander zugekehrte Wandteile (31) der Führungsbahn bilden, zwischen denen das in Verriegelungsposition befindliche Verriegelungsteil (17) aufgenommen ist.

6. Schelle nach Anspruch 5, **dadurch gekennzeichnet, dass** die Rastkörper (29) am einen Schellenkörper (1) und die Rastflächen (25) am anderen Schellenkörper (3) so gestaltet sind, dass beim aneinander Annähern der Schellenkörper (1, 3) und bei außerhalb der Führungsbahn (31) befindlichem Verriegelungsteil (17) die Verhakung durch selbsttätiges Einrasten erfolgt.

7. Schelle nach Anspruch 6, **dadurch gekennzeichnet, dass** die Rastkörper (29) in die der Verhakung entsprechende federnd vorgespannt und mit Schrägflächen (33) versehen sind, die beim aneinander Annähern der Schellenkörper (1, 3) durch Anlaufen am Endrand (37) der Rastflächen (25) die Rastkörper (29) gegen die Elastizitätskraft bewegen, wonach diese beim Überlaufen der Endränder (37) an den Rastflächen (25) einschnappen.

8. Schelle nach einem der Ansprüche 1 bis 7, **dadurch gekennzeichnet, dass** beide Schellenkörper (1, 3) aus einem Kunststoffwerkstoff als einteiliger Verbund spritzgeformt sind, bei dem die Schellenkörper (1, 3) über ein Filmscharnier (15) miteinander verbunden sind.

9. Schelle nach Anspruch 8, **dadurch gekennzeichnet, dass** das Filmscharnier (15) längs eines gemeinsamen Endes beider Schellenkörper (1, 3) für das Aneinanderlegen der Schellenkörper (1, 3) eine Klappachse bildet, die sich parallel zur Durchgangsrichtung der Anfnahmekanäle (5, 7) erstreckt.

10. Schelle nach Anspruch 8 oder 9, **dadurch gekennzeichnet, dass** das Verriegelungsteil (17) über eine deren Abtrennen ermöglichende Sollbruchstelle (19) an einem der Schellenkörper (1, 3) angeformt ist.

11. Schelle nach einem der Ansprüche 2 bis 10, **dadurch gekennzeichnet, dass** die Führungsbahn (31) des Verriegelungsteils (17) am betreffenden Schellenkörper mittig zwischen zwei zueinander symmetrisch gelegenen Aufnahmekanälen (5, 7) gelegen ist und zur Trennebene (9) der Schellenkörper (1, 3) senkrecht verläuft.

12. Schelle nach einem der Ansprüche 1 bis 11, **dadurch gekennzeichnet, dass** das Verriegelungsteil (17) aus einer Verriegelungsleiste gebildet ist, die insbesondere Teil einer T-Form ist.

## Claims

1. A bracket for attaching restiform components, in particular for use as a spacer between tubes and/or cables, with clamp bodies (1, 3) which can be fixed to one another which form, between themselves, receiving channels (5, 7) for the components to be attached, and with a detent device for mutually catching the clamp bodies in a state attached to one another, wherein the detent device has at least one movable detent body (29) at a clamp body (1) which, when the clamp bodies (1, 3) have converged, can catch with a detent surface (25) located on the other clamp body (3), and wherein a seat is present in at least one clamp body (1), **characterised in that** a separate locking part (17), inserted into the seat from outside the clamp, forces a locking position in which the locking part (17) secures the detent body (29) caught on the detent surface (25) against disengagement, by the locking part (17) catching at least partly in the detent body (29).

2. The clamp according to claim 1, **characterised in that** the seat is formed by a guide track (31), along which the locking part (17) can be displaced into the locking position.

3. The clamp according to claim 2, **characterised in that,** upon disengagement, the detent body (29) narrows the guide track (31) with a movement travelling transverse to the guide track (31), and that the locking part (17) located in locking position in the guide track (31) blocks this movement of the detent body (29) by means of positive locking.

4. The clamp according to claim 3, **characterised in that** the detent body (29) forms a wall part (31) of the guide track in the position corresponding to the catching, against which the locking part (17) located in the locking position abuts.

5. The clamp according to claim 4, **characterised in that**, on one clamp body (1), two detent bodies (29) and on the other clamp body (3), two assigned detent surfaces (25) are arranged in such mutual position that the detent bodies (29) form wall parts (31) of the guide track turned towards one another, between which the locking part (17) located in locking position is received.

6. The clamp according to claim 5, **characterised in that** the detent bodies (29) on one clamp body (1) and the detent surfaces (25) on the other clamp body (3) are configured such that, when the clamp bodies (1, 3) converge, and when the locking part (17) is located outside of the guide track (31), catching takes place due to self-actuating latching.

7. The clamp according to claim 6, **characterised in that** the detent bodies (29) in which the catching is correspondingly pre-tensioned elastically and is provided with angular faces (33) which, when the clamp bodies (1, 3) converge, move the detent bodies (29) against elastic force by approaching the end edge (37) of the detent surfaces (25), whereby the detent bodies snap in place on the detent surfaces (25) when overrunning the end edges (37).

8. The clamp according to one of claims 1 to 7, **characterised in that** both clamp bodies (1, 3) are injection-moulded as a one-piece composite from a plastic material, and in the composite, the clamp bodies (1, 3) are connected to one another via an integral hinge (15).

9. The clamp according to claim 8, **characterised in that** the integral hinge (15) forms a hinged axis along a common end of both clamp bodies (1, 3), for adjoining the clamp bodies (1, 3), which hinged axis extends parallel to the passage direction of the receiving channels (5, 7).

10. The clamp according to claim 8 or 9, **characterised in that** the locking part (17) is moulded onto one of the clamp bodies (1, 3) via a rated break point (19) which makes possible its separation.

11. The clamp according to one of claims 2 to 10, **characterised in that** the guide track (31) of the locking part (17) is placed centrally between two receiving channels (5, 7) placed symmetrically to one another on the clamp body in question, and runs perpendicular to the separating plane (9) of the clamp bodies (1, 3).

12. The clamp according to one of claims 1 to 11, **characterised in that** the locking part (17) is formed from a locking bar which in particular is part of a T-shape.

## Revendications

1. Etrier d'immobilisation de pièces en forme de tronçon, à utiliser notamment comme maintien à distance entre des tubes souples et/ou des câbles comprenant des corps (1, 3) d'étrier, qui peuvent être fixés l'un à l'autre et qui forment entre eux des canaux (5, 7) de réception des pièces à immobiliser, et comprenant un dispositif d'encliquetage pour encliqueter mutuellement les corps d'étrier à l'état fixé l'un sur l'autre, le dispositif d'encliquetage ayant, sur l'un des corps (1) de l'étrier, au moins un corps (29) d'encliquetage mobile, qui, lorsque les corps (1, 3) de l'étrier sont rapprochés l'un sur l'autre, peut s'accrocher à une surface (25) d'encliquetage se trouvant sur l'autre corps (3) de l'étrier, et dans lequel il y a un siège dans au moins un corps (1) de l'étrier, **caractérisé en ce qu'**une partie (17) de verrouillage distincte, insérée dans le siège à partir du côté extérieur de l'étrier, prescrit une position de verrouillage, dans laquelle la partie (17) de verrouillage empêche le corps (29) d'encliquetage, accroché à la surface (25) d'encliquetage, de se désaccrocher, par le fait que la partie (17) de verrouillage pénètre, au moins en partie, dans le corps (29) d'encliquetage.

2. Etrier suivant la revendication 1, **caractérisé en ce que** le siège est formé par une voie (31) de guidage, le long de laquelle la partie (17) de verrouillage peut coulisser pour venir dans la position de verrouillage.

3. Etrier suivant la revendication 2, **caractérisé en ce que** le corps (29) d'encliquetage, au désaccrochage, rétrécit la voie (31) de guidage par un déplacement s'étendant transversalement à la voie (31) de guidage et **en ce que** la partie (17) de verrouillage, se trouvant dans la position de verrouillage dans la voie (31) de guidage, bloque ce déplacement du corps (29) d'encliquetage au moyen d'un complémentarité de forme.

4. Etrier suivant la revendication 3, **caractérisé en ce que** le corps (29) d'encliquetage forme, dans la position correspondant à l'accrochage, une partie (31) de paroi de la voie de guidage, sur laquelle s'applique la partie (17) de verrouillage se trouvant dans la position de verrouillage.

5. Etrier suivant la revendication 4, **caractérisé en ce que**, sur un corps (1) de l'étrier, sont disposés deux corps (29) d'encliquetage et, sur l'autre corps (3) de l'étrier, deux surfaces (25) d'encliquetage associées en une relation de position mutuelle telle que les corps (29) d'encliquetage forment des parties (31) de paroi tournées l'une vers l'autre de la voie de guidage, entre lesquelles la partie (17) de verrouillage se trouvant dans la position de verrouillage est reçue.

6. Etrier suivant la revendication 5, **caractérisé en ce que** les corps (29) d'encliquetage sur l'un des corps (1) de l'étrier et les surfaces (25) d'encliquetage sur l'autre corps (3) de l'étrier sont conformés de manière à ce que, lorsque les corps (1, 3) de l'étrier se rapprochent l'un de l'autre et lorsque la partie (17) de verrouillage se trouve à l'extérieur de la voie (31) de guidage, l'accrochage s'effectue par encliquetage automatique.

7. Etrier suivant la revendication 6, **caractérisé en ce que** les corps (29) d'encliquetage sont précontraints élastiquement, conformément à l'accrochage, et sont pourvus de surfaces (33) inclinées, qui, lorsque les corps (1, 3) de l'étrier se rapprochent l'un de l'autre, déplacent, à l'encontre de la force d'élasticité, les corps (29) d'encliquetage au bord (37) d'extrémité des surfaces (25) d'encliquetage, les corps (29) d'encliquetage s'encliquetant en dépassant les bords (37) d'extrémité sur les surfaces (25) d'encliquetage.

8. Etrier suivant l'une des revendications 1 à 7, **caractérisé en ce que** les deux corps (1, 3) de l'étrier sont moulés par injection en une matière plastique sous la forme d'un composite, dans lequel les corps (1, 3) de l'étrier sont reliés entre eux par une charnière (15) souple.

9. Etrier suivant la revendication 8, **caractérisé en ce que** la charnière (15) souple forme, le long d'une extrémité commune des deux corps (1, 3) de l'étrier pour la mise l'un sur l'autre des corps (1, 3) de l'étrier, un axe de rabattement, qui s'étend parallèlement à la direction de traversée des canaux (5, 7) de réception.

10. Etrier suivant la revendication 8 ou 9, **caractérisé en ce que** la partie (17) de verrouillage est formée sur l'un des corps (1, 3) de l'étrier, au-dessus d'un point (19) destiné à se rompre, permettant sa séparation.

11. Etrier suivant l'une des revendications 2 à 10, **caractérisé en ce que** la voie (31) de guidage de la partie (17) de verrouillage se trouve sur le corps de l'étrier concerné, au milieu entre deux canaux (5, 7) de réception disposés symétriquement l'un de l'autre, et s'étend perpendiculairement au plan (9) de séparation des corps (1, 3) de l'étrier.

12. Etrier suivant l'une des revendications 1 à 11, **caractérisé en ce que** la partie (17) de verrouillage est formée d'une réglette de verrouillage, qui est notamment une partie d'une forme en T.
